# FASCICULE DE BREVET EUROPEEN

(11) **EP 3 898 336 B1**
(45) Date de publication et mention de la délivrance du brevet: **03.07.2024**
(21) Numéro de dépôt: 19836506.6
(22) Date de dépôt: 29.11.2019
(51) Int. Cl.: B60R 13/02

(54) **RATTACHEMENT D'UNE GARNITURE INTÉRIEURE À UN JOINT D'ETANCHÉITÉ DE MONTANT DE VÉHICULE AUTOMOBILE**
BEFESTIGUNG EINER INNENVERKLEIDUNG AN EINER KRAFTFAHRZEUGSÄULE
ATTACHMENT OF AN INTERNAL TRIM TO A SEAL OF A PILLAR OF A MOTOR VEHICLE

(30) Priorité: 17.12.2018 FR 1873007
(43) Date de publication de la demande: 27.10.2021
(73) Titulaire: Stellantis Auto SAS, 78300 Poissy (FR)
(72) Inventeur: VILLA, Laurent, 91460 MARCOUSSIS (FR); RIVIERRE, Laurent, 75015 PARIS (FR); DONNADIEU, Frederic, 25420 BART (FR); CUNHA DA SILVA, Daniel, 91270 VIGNEUX SUR SEINE (FR)
(86) Numéro de dépôt international: PCT/FR2019/052860
(87) Numéro de publication internationale: WO 2020/128187

(56) Documents cités:
- EP-A2- 1 813 512
- JP-A- 2005 343 181
- JP-A- 2016 013 771
- US-A1- 2007 228 702
- US-A1- 2014 191 533

## Description

### Domaine technique

La présente invention revendique la priorité de la demande française 1873007 déposée le 17 décembre 2018.

L'invention a trait au domaine des véhicules automobiles, plus particulièrement à la carrosserie et l'habillage intérieur d'un véhicule automobile.

### Technique antérieure

La carrosserie d'un véhicule automobile est conçue avec des éléments extérieurs auxquels sont rattachées des doublures, ces doublures servant à améliorer la rigidité du véhicule ainsi que sa résistance aux chocs. Aussi, pour améliorer l'esthétique de l'intérieur du véhicule, il est connu d'ajouter sur ces doublures des garnitures intérieures, qui sont préférentiellement fabriquées dans des matériaux plastiques. Lorsque la garniture est adjacente à un ouvrant, elle peut également être en contact, ou être rattachée à un joint d'étanchéité, faisant lui-même le contour de l'ouverture recevant l'ouvrant.

Le document de brevet publié US 5,938,273 divulgue une garniture intérieure de montant de baie de pare-brise d'un véhicule automobile, la garniture étant apte à permettre l'absorption des impacts grâce à la présence de rainures transversales. Ces rainures sont positionnées sur une face interne de la garniture, en contact avec la doublure du montant de baie. Mais la fixation de cette garniture intérieure peut être insuffisante, notamment au niveau du joint d'étanchéité de l'ouvrant. Le document de brevet publié JP 2005 343181 A divulgue une garniture intérieure d'un véhicule automobile.

### Exposé de l'invention

L'invention a pour objectif de pallier au moins un des inconvénients de l'état de la technique susmentionné. Plus particulièrement, l'invention a pour objectif d'améliorer le rattachement d'une garniture intérieure au joint d'étanchéité encadrant l'ouverture d'un ouvrant.

L'invention a pour objet une garniture intérieure pour carrosserie de véhicule automobile, comprenant une paroi principale destinée à être montée contre une doublure d'un élément extérieur de la carrosserie, ladite doublure ayant au moins un bord destiné à former avec ledit élément une feuillure de jonction supportant un joint d'étanchéité avec un ouvrant de ladite carrosserie ; ladite paroi comprenant un bord d'insertion destiné à s'insérer dans une rainure dudit joint, une face interne et une face externe ; remarquable en ce que la garniture comprend, en outre, sur au moins une des faces interne et externe de la paroi principale, au niveau du bord d'insertion dans le joint, au moins un bossage apte à s'engager avec un épaulement dans la rainure du joint.

Selon un mode avantageux de l'invention, l'au moins un bossage est sur la face interne de la paroi principale.

Selon l'invention, la garniture comprend, en outre, des nervures s'étendant transversalement sur la face interne de la paroi principale, depuis le bord d'insertion dans le joint, plusieurs des bossages étant formés sur les nervures, respectivement.

Selon un mode avantageux de l'invention, chacune des nervures comprend une portion principale distale du bord d'insertion dans le joint et une portion d'extrémité s'étendant de la portion principale jusqu'audit bord et formant un des bossages. Selon un mode avantageux de l'invention, la portion d'extrémité de chacune des nervures présente une largeur réduite par rapport à la largeur de la portion principale de manière à former un épaulement apte à prendre appui sur le joint.

Selon un mode avantageux de l'invention, l'au moins un bossage présente un profil transversal, en partant depuis une extrémité distale du bord d'insertion, avec une pente montante, un sommet, suivi d'une diminution de hauteur.

Selon un mode avantageux de l'invention, la diminution de hauteur du profil transversal de l'au moins un bossage est une pente descendante.

L'invention a également pour objet un véhicule automobile avec une carrosserie, comprenant : une doublure d'un élément extérieur de la carrosserie, ladite doublure ayant au moins un bord formant avec ledit élément une feuillure de jonction délimitant une ouverture de ladite carrosserie ; un joint d'étanchéité monté sur la feuillure de jonction, destiné à coopérer avec un ouvrant de l'ouverture, et comprenant une rainure ; une garniture intérieure montée contre la doublure ; remarquable en ce que la garniture est selon l'invention, le bord d'insertion de ladite garniture étant inséré dans la rainure du joint.

Selon un mode avantageux de l'invention, l'élément extérieur est un montant latéral avant, milieu ou arrière de la carrosserie. Avantageusement, le montant latéral avant est un montant de baie de pare-brise, l'ouvrant étant dans ce cas une porte avant.

Selon un mode avantageux de l'invention, la portion d'extrémité de chacune des nervures présente une largeur réduite par rapport à la largeur de la portion principale de manière à former un épaulement apte à prendre appui sur le joint, ledit épaulement des nervures étant en appui sur une face du joint adjacente à la rainure.

Les mesures de l'invention sont intéressantes en ce qu'elles permettent d'améliorer la fixation de la garniture intérieure sur le joint d'étanchéité de l'ouvrant du véhicule. La présence du ou des bossages, qui s'insèrent dans la rainure du joint d'étanchéité adjacent, améliore l'accroche de la garniture en augmentant les efforts de désengagement nécessaires pour son retrait du joint. La présence de nervures sur la face interne de la garniture permet en outre d'augmenter la solidité du montant sur lequel est fixé la garniture, sans pertes d'esthétique. L'invention permet en outre de réduire les coûts de fabrication, car la garniture est réalisée dans des matériaux peu onéreux. De plus, cette garniture se monte facilement sur la carrosserie du véhicule.

D'autres caractéristiques et avantages de la présente invention seront mieux compris à l'aide de la description et des dessins.

### Brève description des dessins

[Fig 1] est une vue en perspective depuis l'avant d'un véhicule automobile selon l'invention ;
[Fig 2] représente une vue du montant de baie avec la garniture intérieure selon l'invention ;
[Fig 3] représente une vue en perspective depuis une face interne de la garniture représentée à la figure 2 ;
[Fig 4] représente une vue en coupe de la liaison entre le joint d'étanchéité et la garniture intérieure représentée aux figures 2 et 3.

### Description détaillée

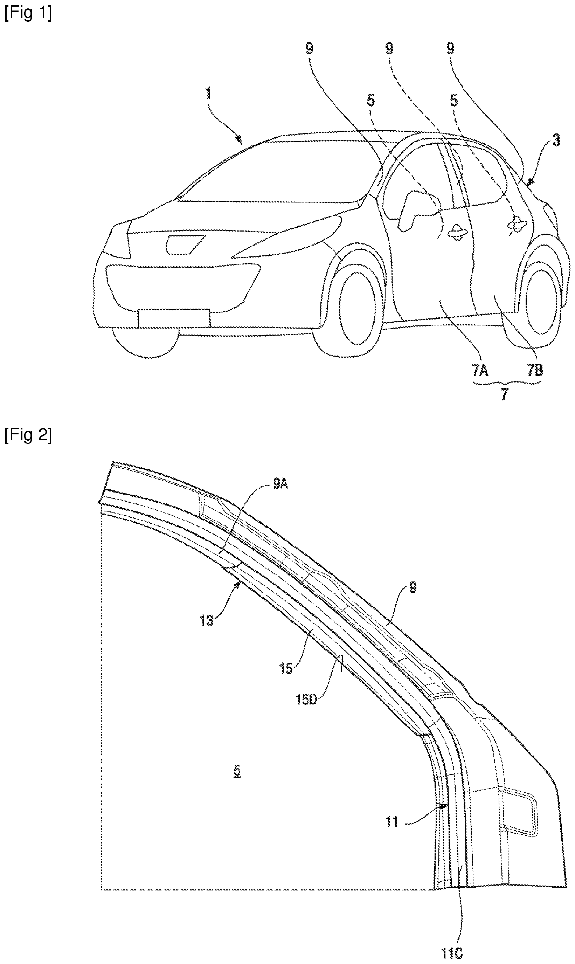

La figure 1 montre une vue en perspective d'un véhicule automobile selon l'invention. Le véhicule 1 comprend une carrosserie 3, généralement fabriquée en tôles métalliques, qui donne sa forme générale audit véhicule 1. Ainsi, des ouvertures 5 sont généralement encadrées par des pieds avant, milieu et arrière à chacun des côtés du véhicule 1. La partie supérieure des pieds avant, milieu et arrière forme des montants latéraux 9 avant, milieu, et arrière, respectivement. En particulier, le montant latéral avant 9 est un montant de pare-brise. Les ouvertures 5 permettent le positionnement d'ouvrants 7, constituant à la figure 1 une porte avant 7A, ou une porte arrière 7B.

La figure 2 montre une vue du montant de baie avec une garniture intérieure selon l'invention. Le montant de baie 9 correspond à un élément extérieur 9 contre lequel se trouve une doublure 9A orientée vers l'intérieur du véhicule. La doublure 9A et l'élément extérieur 9 forment, à un bord de ladite doublure 9A et dudit élément 9, une feuillure de jonction délimitant l'ouverture 5 de la carrosserie du véhicule. Sur cette feuillure de jonction est également monté un joint d'étanchéité 11, une portion latérale 11C du joint 11 formant un renflement coopérant avec l'ouvrant (représenté à la figure 1) de l'ouverture 5 du véhicule. Sur ce montant de baie 9 est également positionné la garniture intérieure 13 selon l'invention. Cette garniture intérieure 13 comprend une paroi principale 15, ladite paroi 15 étant montée contre la doublure 9A du montant de baie 9, et s'insère sur l'extérieur du véhicule dans le joint d'étanchéité 11. Sur cette figure, on peut tout particulièrement voir une face externe 15D de la garniture intérieure 13. Cette garniture 13 s'étend longitudinalement sur le montant de baie 9.

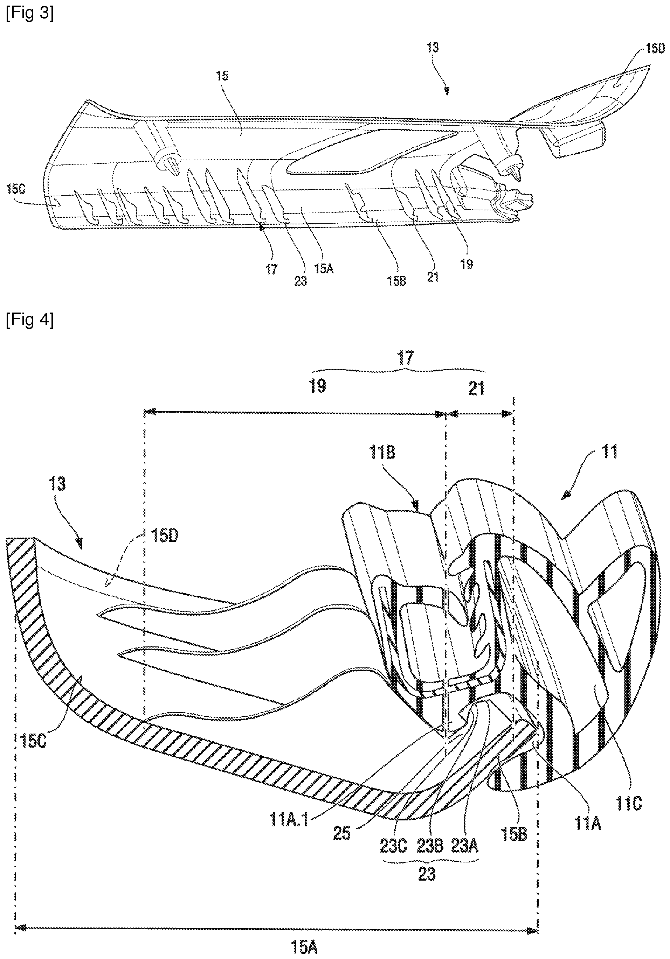

La figure 3 montre une vue en perspective de la garniture intérieure du montant de baie selon l'invention. Sur cette figure, on peut voir que la paroi principale 15 de la garniture intérieure 13 présente une section transversale en L, avec la face externe 15D décrite à la figure 2 et une face interne 15C. Cette garniture 13 présente en outre des nervures 17 qui s'étendent sur un bord d'insertion 15A de la paroi principale 15, et plus préférentiellement depuis une extrémité distale 15B dudit bord d'insertion 15A de la garniture intérieure 13. Avantageusement, ces nervures 17 s'étendent transversalement sur la face interne 15C de la paroi principale 15, depuis le bord d'insertion 15A. Chaque nervures 17 présente une portion principale 19 distale du bord d'insertion 15A et une portion d'extrémité 21. La portion d'extrémité 21 est en continuité de la portion principale 19, et s'étend de la paroi principale 15 jusqu'au bord d'insertion 15A de la garniture intérieure 13. La portion d'extrémité 21 de chaque nervure 17 forme un des bossages 23.

Alternativement, les bossages 23 peuvent être directement formés sur la face interne 15C ou la face externe 15D de la garniture 13. Ces bossages 23 sont préférentiellement réalisés sur le bord d'insertion 15A de la garniture 13, et plus préférentiellement sur l'extrémité distale 15B de ladite garniture 13. De manière avantageuse, les bossages 23 sont retrouvés sur la face interne 15C de la paroi principale 15. Plusieurs des bossages 23 sont avantageusement formés sur les nervures 17. Il est entendu que certains des bossages 23 peuvent être formés directement sur la paroi principale 15, c'est-à-dire pas sur des nervures 17.

La figure 4 montre la liaison entre le joint d'étanchéité et la garniture intérieure selon l'invention. Sur cette figure, on peut voir que le bord d'insertion 15A de la garniture 13, et plus particulièrement l'extrémité distale 15B de ladite garniture 13 est inséré dans le joint d'étanchéité 11, et plus particulièrement dans une rainure 11A dudit joint 11. Cette rainure 11A présente un épaulement 11A.1 qui s'engage avec le bossage 23 de la nervure 17 correspondante. La portion d'extrémité 21 de chaque nervure 17 présente une largeur réduite par rapport à la largeur de la portion principale distale 19, de manière à former un épaulement 25 apte à prendre appui sur le joint 11, en particulier sur l'épaulement 11A.1 adjacent de la rainure 11A dudit joint 11. L'épaulement 25 de la nervure 17 est avantageusement en appui sur une face du joint 11 adjacente à la rainure 11A. Le bossage 23 est en continuité de l'épaulement 25, et présente un profil transversal, en partant de l'extrémité distale 15B du bord 15A, avec une pente montante 23A, un sommet 23B suivi d'une diminution de hauteur 23C, ce qui permet au bossage 23 d'être retenu dans la rainure 11A. Avantageusement, la diminution de hauteur 23C est une pente descendante 23C. Sur cette figure, on peut également voir que le joint 11 présente une portion principale 11B avec une section en U, cette portion principale 11B étant apte à s'insérer sur la feuillure de jonction du montant de baie et de sa doublure (le montant et la doublure étant visibles à la figure 2). On peut voir également la portion latérale 11C dudit joint 11, décrite à la figure 2, qui forme dans le cas présent deux renflements. Ces renflements sont aptes à entrer en contact avec un ouvrant de véhicule, ils ont une fonction d'amortissement.

## Revendications

1. Garniture intérieure (13) pour carrosserie (3) de véhicule automobile (1), comprenant une paroi principale (15) destinée à être montée contre une doublure (9A) d'un élément extérieur (9) de la carrosserie (3), ladite doublure (9A) ayant au moins un bord destiné à former avec ledit élément (9) une feuillure de jonction supportant un joint d'étanchéité (11) avec un ouvrant (7) de ladite carrosserie (3) ; ladite paroi (15) comprenant un bord d'insertion (15A) destiné à s'insérer dans une rainure (11A) dudit joint (11), une face interne (15C) et une face externe (15D) ; la garniture (13) comprenant, en outre, sur au moins une des faces interne (15C) et externe (15D) de la paroi principale (15), au niveau du bord d'insertion (15A) dans le joint (11), au moins un bossage (23) apte à s'engager avec un épaulement (11A.1) dans la rainure (11A) du joint (11), **caractérisée en ce que** la garniture (13) comprend, en outre, des nervures (17) s'étendant transversalement sur la face interne (15C) de la paroi principale (15), depuis le bord d'insertion (15A) dans le joint (11), plusieurs des bossages (23) étant formés sur les nervures (17), respectivement.

2. Garniture intérieure (13) pour carrosserie (3) selon la revendication 1, **caractérisée en ce que** l'au moins un bossage (23) est sur la face interne (15C) de la paroi principale (15).

3. Garniture intérieure (13) pour carrosserie (3) selon l'une des revendications 1 ou 2, **caractérisée en ce que** chacune des nervures (17) comprend une portion principale distale (19) du bord d'insertion (15A) dans le joint (11) et une portion d'extrémité (21) s'étendant de la portion principale (19) jusqu'audit bord (15A) et formant un des bossages (23).

4. Garniture intérieure (13) pour carrosserie (3) selon la revendication 3, **caractérisée en ce que** la portion d'extrémité (21) de chacune des nervures (17) présente une largeur réduite par rapport à la largeur de la portion principale (19) de manière à former un épaulement (25) apte à prendre appui sur le joint (11).

5. Garniture intérieure (13) pour carrosserie (3) selon l'une des revendications 1 à 4, **caractérisée en ce que** l'au moins un bossage (23) présente un profil transversal, en partant depuis une extrémité distale (15B) du bord d'insertion (15A), avec une pente montante (23A), un sommet (23B), suivi d'une diminution de hauteur (23C).

6. Garniture intérieure (13) pour carrosserie (3) selon la revendication 5, **caractérisée en ce que** la diminution de hauteur (23C) du profil transversal de l'au moins un bossage (23) est une pente descendante (23C).

7. Véhicule automobile (1) avec une carrosserie (3), comprenant :
- une doublure (9A) d'un élément extérieur (9) de la carrosserie (3), ladite doublure (9A) ayant au moins un bord formant avec ledit élément (9) une feuillure de jonction délimitant une ouverture (5) de ladite carrosserie (3) ;
- un joint d'étanchéité (11) monté sur la feuillure de jonction, destiné à coopérer avec un ouvrant (7) de l'ouverture (5), et comprenant une rainure (11A) ;
- une garniture intérieure (13) montée contre la doublure (9A) ;
**caractérisé en ce que** la garniture (13) est selon l'une des revendications 1 à 6, le bord d'insertion (15A) de ladite garniture (13) étant inséré dans la rainure (11A) du joint (11).

8. Véhicule automobile (1) selon la revendication 7, **caractérisé en ce que** l'élément extérieur (9) est un montant latéral (9) avant, milieu ou arrière de la carrosserie (3).

9. Véhicule automobile (1) selon l'une des revendications 7 ou 8, **caractérisé en ce que** la garniture (13) est selon la revendication 5, l'épaulement (25) des nervures (17) étant en appui sur une face du joint (11) adjacente à la rainure (11A).

## Patentansprüche

1. Innenverkleidung (13) für die Karosserie (3) eines Kraftfahrzeugs (1), die eine Hauptwand (15) aufweist, die an einer Auskleidung (9A) eines äußeren Elements (9) der Karosserie (3) angebracht werden kann, wobei die Auskleidung (9A) wenigstens einen Rand aufweist, der dazu bestimmt ist, mit dem Element (9) einen Verbindungsflansch zu bilden, der eine Dichtung (11) mit einer Öffnung (7) der Karosserie (3) trägt; wobei die Wand (15) einen Einführungsrand (15A) zum Einführen in eine Nut (9) aufweist 11A) der Dichtung (11), eine Innenfläche (15C) und eine Außenfläche (15D); wobei die Dichtung (13) ferner auf mindestens einer der Innenflächen (15C) und der Außenfläche (15D) der Hauptwand (15) an der Einführungskante (15A) in der Dichtung (11) mindestens eine Erhebung (23) aufweist, die mit einer Schulter (11A.1) in der Nut (11A) der Dichtung (11) in Eingriff kommen kann, **dadurch gekennzeichnet, dass** Die Dichtung (13) umfasst ferner Rippen (17), die sich quer über die Innenseite (15C) der Hauptwand (15) von der Einführkante (15A) in die Dichtung (11) erstrecken, wobei mehrere der Höcker (23) jeweils an den Rippen (17) ausgebildet sind.

2. Innenverkleidung (13) für eine Karosserie (3) nach Anspruch 1, **dadurch gekennzeichnet, dass** der mindestens eine Vorsprung (23) auf der Innenseite (15C) der Hauptwand (15) ist.

3. Innenverkleidung (13) für eine Karosserie (3) nach einem der Ansprüche 1 oder 2, **dadurch gekennzeichnet, dass** jede der Rippen (17) einen distalen Hauptabschnitt (19) der Einführungskante (15A) in der Dichtung (11) und einen Endabschnitt (21) umfasst, der sich vom Hauptabschnitt (19) zu der Kante (15A) erstreckt und einen der Höcker (23) bildet.

4. Innenverkleidung (13) für eine Karosserie (3) nach Anspruch 3, **dadurch gekennzeichnet, dass** der Endabschnitt (21) jeder der Rippen (17) eine Breite aufweist, die in Bezug auf die Breite des Hauptabschnitts (19) verringert ist, um eine Schulter (25) zu bilden, die geeignet ist, sich an der Dichtung (11) abzustützen.

5. Innenverkleidung (13) für eine Karosserie (3) nach einem der Ansprüche 1 bis 4, **dadurch gekennzeichnet, dass** die mindestens eine Erhebung (23) ein Querprofil aufweist, ausgehend von einem distalen Ende (15B) der Einführungskante (15A), mit einer ansteigenden Neigung (23A), einem Scheitel (23B), gefolgt von einer Höhenabnahme (23C).

6. Innenverkleidung (13) für eine Karosserie (3) nach Anspruch 5, **dadurch gekennzeichnet, dass** die Höhenabnahme (23C) des Querprofils der mindestens einen Erhebung (23) eine abfallende Neigung (23C) ist.

7. Kraftfahrzeug (1) mit Aufbau (3), bestehend aus:
- eine Auskleidung (9A) eines äußeren Elements (9) der Karosserie (3), wobei die Auskleidung (9A) wenigstens einen Rand aufweist, der mit dem Element (9) einen Verbindungsfalz bildet, der eine Öffnung (5) der Karosserie (3) begrenzt;
- eine auf dem Verbindungsfalz angebrachte Dichtung (11) zum Zusammenwirken mit einem Öffnungselement (7) der Öffnung (5) mit einer Nut (11A);
- eine an der Auskleidung (9A) angebrachte Innenauskleidung (13);
**dadurch gekennzeichnet, dass** die Dichtung (13) nach einem der Ansprüche 1 bis 6 ist, wobei die Einführkante (15A) der Dichtung (13) in die Nut (11A) der Dichtung (11) eingesetzt ist.

8. Kraftfahrzeug (1) nach Anspruch 7, **dadurch gekennzeichnet, dass** das äußere Element (9) eine vordere, mittlere oder hintere Seitenstütze (9) der Karosserie (3) ist.

9. Kraftfahrzeug (1) nach einem der Ansprüche 7 oder 8, **dadurch gekennzeichnet, dass** die Dichtung (13) nach Anspruch 5 ist, wobei die Schulter (25) der Rippen (17) auf einer Seite der Dichtung (11) anliegt, die an die Nut (11A) angrenzt.

## Claims

1. An inner lining (13) for a bodywork (3) of a motor vehicle (1), comprising a main wall (15) intended to be mounted against a lining (9A) of an outer element (9) of the bodywork (3), said lining (9A) having at least one edge intended to form, with said element (9), a junction rebate supporting a seal (11) with a leaf (7) of said bodywork (3); said wall (15) comprising an insertion edge (15A) intended to be inserted into a groove (11A) of said seal (11), an inner face (15C) and an outer face (15D); the lining (13) further comprising, on at least one of the inner (15C) and outer (15D) faces of the main wall (15), at the level of the insertion edge (15A) in the seal (11), at least one boss (23) capable of engaging with a shoulder (11A.1) in the groove (11A) of the seal (11), **characterized in that** the lining (13) comprises in addition, ribs (17) extending transversely on the inner face (15C) of the main wall (15), from the insertion edge (15A) in the seal (11), several of the bosses (23) being formed on the ribs (17), respectively.

2. Interior lining (13) for bodywork (3) according to claim 1, **characterized in that** the at least one boss (23) is on the internal face (15C) of the main wall (15).

3. Interior lining (13) for a bodywork (3) according to either of claims 1 and 2, **characterized in that** each of the ribs (17) comprises a distal main portion (19) of the insertion edge (15A) in the seal (11) and an end portion (21) extending from the main portion (19) to the said edge (15A) and forming one of the bosses (23).

4. Interior lining (13) for a bodywork (3) according to claim 3, **characterized in that** the end portion (21) of each of the ribs (17) has a width which is reduced with respect to the width of the main portion (19) so as to form a shoulder (25) capable of bearing on the seal (11).

5. Interior lining (13) for bodywork (3) according to one of claims 1 to 4, **characterized in that** the at least one boss (23) has a transverse profile, starting from a distal end (15B) of the insertion edge (15A), with a rising slope (23A), a vertex (23B), followed by a decrease in height (23C).

6. Interior lining (13) for bodywork (3) according to claim 5, **characterized in that** the decrease in height (23C) of the transverse profile of the at least one boss (23) is a descending slope (23C).

7. Motor vehicle (1) with bodywork (3), comprising:
- a lining (9A) of an outer element (9) of the bodywork (3), said lining (9A) having at least one edge forming with said element (9) a junction rebate delimiting an opening (5) of said bodywork (3);
- a seal (11) mounted on the junction rebate, intended to cooperate with an opening (7) of the opening (5), and comprising a groove (11A);
- an inner lining (13) mounted against the lining (9A);
**characterized in that** the lining (13) is according to one of claims 1 to 6, the insertion edge (15A) of said lining (13) being inserted into the groove (11A) of the seal (11).

8. Motor vehicle (1) according to claim 7, **characterized in that** the outer element (9) is a front, middle or rear lateral upright (9) of the bodywork (3).

9. Motor vehicle (1) according to one of claims 7 or 8, **characterized in that** the lining (13) is according to claim 5, the shoulder (25) of the ribs (17) bearing on a face of the seal (11) adjacent to the groove (11A).
